# EUROPÄISCHE PATENTSCHRIFT

(11) **EP 1 308 639 B1**
(45) Veröffentlichungstag und Bekanntmachung des Hinweises auf die Patenterteilung: **06.10.2004**
(21) Anmeldenummer: 02010411.3
(22) Anmeldetag: 08.05.2002
(51) Int. Cl.: F16B 41/00, F16B 39/02

(54) **Anordnung zur Sicherung einer Schraubverbindung**
Arrangement for securing a threaded connection
Dispositif de sécurisation d'une liaison vissée

(30) Priorität: 05.11.2001 DE 20118006 U
(43) Veröffentlichungstag der Anmeldung: 07.05.2003
(73) Patentinhaber: BÜMACH ENGINEERING INTERNATIONAL B.V., 7825 VS Emmen (NL)
(72) Erfinder: Büter, Josef, 49733 Haren/Altenberge (DE)
(74) Vertreter: Haussingen, Peter

(56) Entgegenhaltungen:
- CH-A- 479 017
- DE-B- 1 028 393
- US-A- 1 570 155

## Beschreibung

Die Erfindung bezeichnet eine Anordnung zur Sicherung einer Schraubverbindung, insbesondere zur Vermeidung des unerwünschten Lockerns oder Lösens von koaxial miteinander verschraubter Teile, wie sie aus der DE 1 028 393 B bekannt ist.

Aus dem allgemeinen Stand der Technik sind die verschiedensten Lösungen zur Sicherung von Gewindeverbindungen gegen unzulässige Lockerungen bekannt. Prinzipiell lassen sich diese Sicherungen von Schraubverbindungen in kraftschlüssig, formschlüssig, stoffschlüssig, sperrend und mitverspannend wirkende weise unterteilen.

Kraftschlüssige Sicherungselemente werden zumeist so ausgebildet und angeordnet, dass diese eine zusätzliche axiale oder auch radiale Presskraft auf die Gewindeflanken ausüben, um dadurch einen erhöhten Reibschluss zu bewirken, der dem Losdrehmoment mittels Selbsthemmung des Gewindes entgegen wirkt. Hierbei werden unter Anderem zusätzliche Sicherungs- oder auch Kontermuttern benutzt. Erhöhte Reibschlüsse zwischen Schraubelementen werden auch mit Kunststoffbeschichtungen oder speziellen Einsätzen im Gewinde erzielt, wobei diese jedoch nur in einem bestimmten Temperaturbereich einsetzbar sind, da die Größe der Hemmung entsprechend den spezifischen Eigenschaften des eingesetzten Kunststoff temperaturabhängig ist.

Formschlüssige Sicherungselemente verhindern das Losdrehen durch eine konturengetreue Kopplung der beteiligten Schraubpartner, so dass bei Drehung eines der Partner, der jeweils andere beispielsweise mittels Sicherungsblech, Splint, Drehsicherung oder Verzahnung zum gleichsinnigen Mitdrehen gezwungen wird wodurch keine Lockerung der Gewindeverbindung möglich ist.

In der Druckschrift DE 34 18 220 A1 wird beispielsweise eine positionssicherbare Schraube mit zugehöriger, den Schraubenkopf gegen Verdrehung sichernder Verdrehsicherung, die form- und kraftschlüssig wirkt, beschrieben. Die zu sichernde Schraube weist dabei am Umfang ihres Kopfs eine Verzahnung auf, die mit einer komplementären, zumindest teilweisen Verzahnung eines Sicherungsrings, der von einer Sicherungsschraube in seiner Position fixiert wird, zusammenwirkt. Sollte sich jedoch durch betriebsbedingte Einwirkungen die Sicherungsschraube lösen, so würde sich auch die in ihrer Position zu sichernde Schraube zumindest soweit lockern können, bis es zu einem Verklemmen der Verzahnung des Schraubenkopfs mit dem Ende der teilweisen Verzahnung des Sicherungsrings kommt, wobei jedoch bereits das verschraubte Teil gelockert ist, wodurch seine Funktion schon gestört sein kann.

Eine stoffschlüssige Gewindesicherung kann mittels zwischen den Gewindeflanken der Schraubpartner eingebrachter, aushärtbarer Materialien erzielt werden. So werden in Folge der Adhäsion zwischen einem eingebrachten Klebstoff und dem Grundmaterial des Gewindes hohe Haftkräfte erzielt, die das Lösen der Schraubverbindung erschweren. Im Schwermaschinenbau werden zum gleichen Zweck Schweißnähte vorgesehen, die an den Stoßstellen der Schraubpartner angeordnet werden und wobei die miteinander verschraubten Teile an einer oder mehreren Stellen der Stoßstelle verschweißt werden, wodurch die autarke Drehung eines der an der Verschraubung beteiligten Partner ausgeschlossen ist.

Sperrende Sicherungselemente sind beispielsweise so ausgelegt, dass einer der Schraubpartner gehärtete Zähne aufweist, die sich bei der Verschraubung in das Material des anderen eingraben.

Bei verspannten, federnden Sicherungselementen, die zwischen den Schraubpartnern angeordnet sind, werden die axialen Presskräfte auf den Flanken der Gewinde so erhöht, dass bei wechselnden Lasten die erforderliche, verbleibende Restklemmkraft größer als die einwirkenden Momente ist.

Bei allen kraftschlüssigen, sperrenden oder mitverspannend wirkenden Sicherungen für Gewindeverbindungen besteht die Gefahr des Lösens, wobei insbesondere Vibrationen im Betrieb sich besonders ungünstig auswirken. Diese Gefahr besteht bei form- und stoffschlüsssigen Sicherungen nicht. Je nach Ausführung kann die Herstellung formschlüssiger Verbindungen sehr aufwändig sein und die benutzten Sperrmittel lassen sich nur einmal verwenden.

Bei stoffschlüssigen Verbindungen ist im Falle einer notwendigen Trennung der Verbindung das Lösen bzw. Entfernen der Sicherung aufwändig sowie im Falle der Verschweißung der Schraubpartner, nur unter Anwendung mechanischer Trennverfahren möglich.

Die Aufgabe der Erfindung besteht darin, eine Anordnung zur Sicherung einer Schraubverbindung zu schaffen, bei der ein betriebsbedingtes Lockern der Schraubverbindung zwischen zwei Schraubelementen zwangsläufig eine zunehmende Verspannung zwischen diesen bewirkt, dabei das einfache Lösen gewährleistet sowie einfach und kostengünstig zu realisieren ist.

Die Aufgabe wird durch die im Patentanspruch 1 aufgeführten Merkmale gelöst. Bevorzugte Weiterbildungen ergeben sich aus den Unteransprüchen.

Der Grundgedanke der Anordnung zur Sicherung einer Schraubverbindung besteht darin, die unbeabsichtigte Lockerung dadurch zu verhindern, daß die beiden, zu einer Schraubpaarung gehörenden Schraubelemente eine zusätzliche Sperrschraube aufweisen, die form- oder kraftschlüssig mit beiden Schraubelementen gekoppelt ist, wobei selbst differentiell kleine Radialbewegungen eines der Schraubelemente eine zunehmende Verspannung der Sperrschraube, durch deren erfolgende Drehbewegung in Einschraubrichtung im Zusammenwirken mit einer zur Einschraubrichtung der Schraubelemente gegenläufigen Außengewindeflanke, bewirken.
Diese Sicherung ist vorzugsweise für eine Gewindeverbindung zwischen zwei zylindrischen, koaxial miteinander, insbesondere ineinander verschraubter Teile mit gleichem Außendurchmesser, zumindest im Bereich der Stirnflächen beider Schraubelemente, wobei eines ein Außengewinde und das andere ein komplementäres Innengewinde trägt, einsetzbar.
Die Einschraubtiefe des Teiles mit dem Außengewinde in das Teil mit dem Innengewinde ist durch einen umlaufenden Bund bzw. die stirnseitigen Stoßstellen beider Gewinde tragenden Teile, vorgegeben.
Die Sicherung gegen das Lockern der Gewindeverbindung wird beispielsweise aus einer Senkkopfschraube als Sperrschraube im Bund bzw. am oberen Ende des Umfangs eines zweiten Schraubelements mit dem Außengewinde und einer Fase in Form einer gegenläufigen Gewindeflanke am Umfang des ersten Schraubelements mit dem Innengewinde gebildet. Die in der Nahe der Stoßstellen beider Schraubelemente, im zweiten Schraubelement, angeordnete Sperrschraube liegt mit der Unterseite ihres Kopfs, der Senkfläche, an der Schräge der gegenläufigen Außengewindeflanke am anderen, ersten Schraubelement, auf.
Nach dem Verschrauben der beiden Schraubelemente, wird die konische Sperrschraube in ihrer Gewindebohrung im zweiten Schraubelement soweit angezogen und verspannt, dass sich zwischen deren Kopf und Gewindeflanke am Umfang des ersten Schraubelements eine kraftschlüssige Linienberührung ergibt. Diese gegenläufige Gewindeflanke mit einem Winkel, der dem Konuswinkel der Sperrschraube entspricht, weist eine um mindestens 0,5 mm größere Steigung als das zur Verschraubung der beiden Schraubelemente verwendete Gewinde auf. Jede lösende Drehung der Schraubelemente gegeneinander bedingt eine Erhöhung des sperrenden Reibmoments zwischen Sperrschraube und der gegenläufigen Gewindeflanke, so dass eine Lockerung der Gewindeverbindung ausgeschlossen ist.
Weiterhin ist vorstellbar, die form- oder kraftschlüssige Wirkverbindung und Kopplung zwischen dem Konus der Sperrschraube und der gegenläufigen Gewindeflanke durch zusätzliche Sicherungselemente, wie ineinandergreifende Verzahnungen zwischen beiden Sicherungsteilen oder in Form von Sicherungsscheiben für die Sperrschraube bei extremen Anforderungen, insbesondere bei Vibrationen, zu unterstützen.

Die Vorteile der Erfindung bestehen insbesondere in der zuverlässigen, progressiv wirkenden Sicherung einer Gewindepaarung bei geringem Aufwand, wobei ein Lösen derselben, ohne Zerstörung eines Sicherungselements, durch Drehen der Sicherungsschraube in deren Öffnungsrichtung gewährleistet ist.

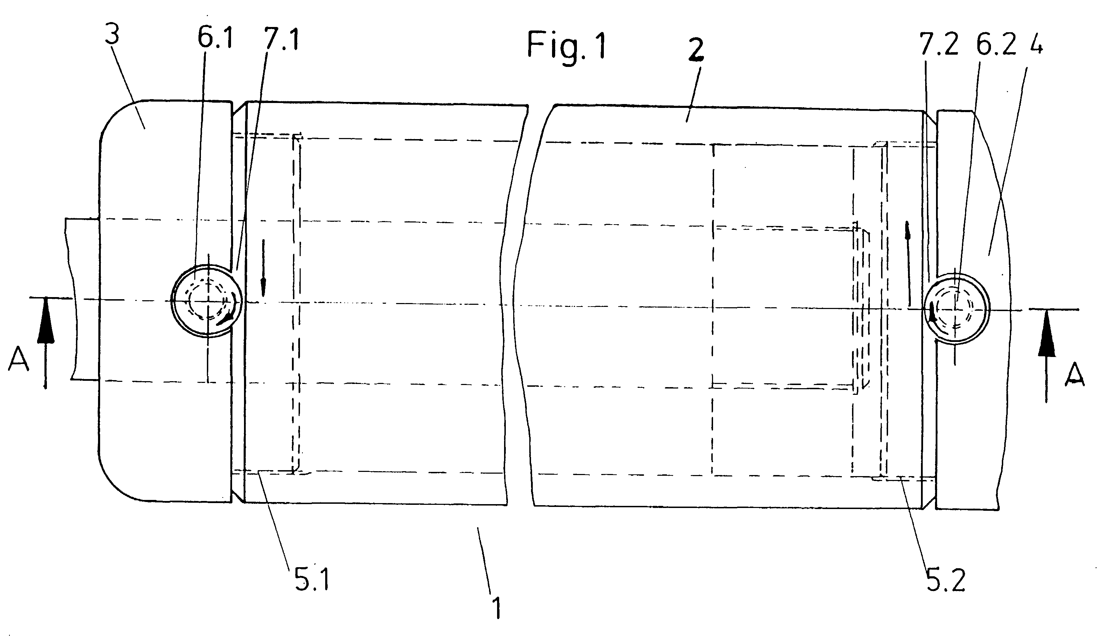

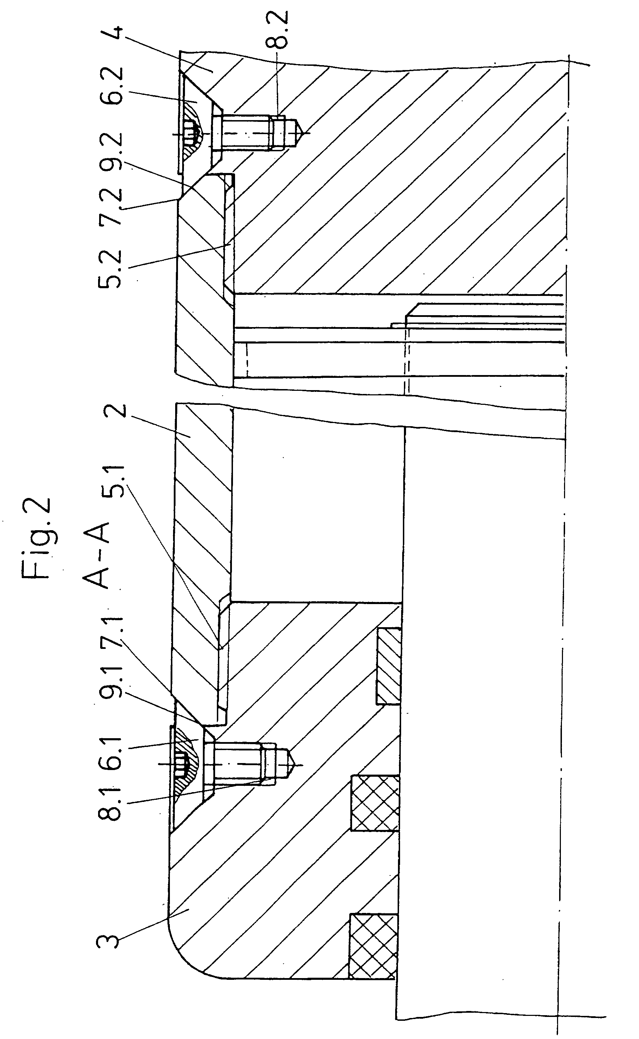

Die Erfindung wird als Ausführungsbeispiel an Hand des Einsatzes zur Sicherung der Schraubverbindungen zwischen einem Zylinderrohr und Boden- sowie Führungsverschlussteil eines Arbeitszylinders mit Fig. 1 als Ansicht der miteinander verschraubten Teile des Arbeitszylinders mit Anordnung der Sperrschrauben sowie
Fig. 2 als Teilschnitt des Arbeitszylinders mit Verschraubungen und Sperrschraube näher erläutert.

Nach Fig.1 weist ein Arbeitszylinder 1 ein Zylinderrohr 2 als erstes Schraubelement auf, mit dem ein Führungsverschlussteil 3 und ein Bodenverschlussteil 4, als zweite Schraubelemente, über Gewinde verbunden sind, wobei das Zylinderrohr 2 im Bereich der beiden Enden jeweils ein Innengewinde trägt, das zusammen mit dem komplementären Außengewinde auf dem Einschraubstutzen des Führungsverschlussteil 3 als auch dem Bodenverschlussteil 4 eine Gewindepaarung 5 (5.1; 5.2) bildet.
Mittels der über die Gewindepaarung 5 (5.1; 5.2) vorliegenden, lösbaren Kopplung des Zylinderrohrs 2 mit den Verschlussteilen 3; 4 ist die Reparaturfähigkeit des Arbeitszylinders gewährleistet.
Zur Sicherung gegen das Lockern der, mittels der Gewindepaarung 5 (5.1; 5.2), mit dem Zylinderrohr 2 verbundenen Verschlussteile 3; 4, sind in der Nähe der Stoßstelle zwischen der Stirnseite des Zylinderrohrs 2 und den Stirnseiten des Bunds des Verschlussteils 3; 4 jeweils eine Sperrschraube 6 (6.1; 6.2) in Form einer Senkschraube angeordnet, die an ihrer zugeordneten Senkfläche mit einer an den Stirnseiten des Zylinderrohrs 2 angeformten Außengewindeflanke 7 (7.1; 7.2) zusammenwirkt.
Die Außengewindeflanke 7 (7.1; 7.2) ist gegenläufig zur Gewindepaarung 5 (5.1; 5.2) und mit einer größeren Steigung als diese ausgebildet.
Wie in Fig.2 im Schnitt dargestellt, wird die Sperrschraube 6 (6.1; 6.2), insbesondere in Form einer Senkschraube, von einem entsprechenden, gesenkten Muttergewinde 8 (8.1; 8.2) in den Verschlussteilen 3; 4 aufgenommen, wobei deren untere Fläche 9 (9.1; 9.2) nach dem Einschrauben auf der Außengewindeflanke 7 (7.1; 7.2) aufliegt.
Infolge der vorliegenden kraftschlüssigen, linienförmigen Wirkverbindung der unteren Fläche 9 (9.1; 9.2) der Sperrschraube 6 (6.1; 6.2) mit der Außengewindeflanke 7 (7.1; 7.2) führt jede lockernde, partielle Drehbewegung einer der Partner der Gewindepaarung 5 (5.1; 5.2) gegeneinander zu einer Erhöhung des sperrenden Reibmoments, da die Sperrschraube 6 (6.1; 6.2) dabei weiter in das Muttergewinde 8 (8.1; 8.2) geschraubt, gleichzeitig die wirksame Keilhöhe der gegenläufigen Außengewindeflanke 7 (7.1; 7.2) vergrößert und somit eine zunehmende Presskraft zwischen der unteren Fläche 9 (9.1; 9.2) und der Außengewindeflanke 7 (7.1; 7.2) bewirkt wird.
Eine formschlüssige Kopplung zwischen der unteren Fläche 9 (9.1; 9.2) der Sperrschraube 6 (6.1; 6.2) und der Außengewindeflanke 7 (7.1; 7.2) ist mittels komplementärer Strukturierungen, wie Verzahnungen, Rändelungen oder Ähnlichem auf den Oberflächen beider als Sicherung zusammenwirkender Teile für extreme Einsatzfälle ebenso realisierbar wie eine zusätzliche Sicherung der Sperrschraube 6 (6.1; 6.2) in bekannter Weise.

### Verwendete Bezugszeichen

- 1: Arbeitszylinder
- 2: Zylinderrohr
- 3: Führungsverschlussteil
- 4: Bodenverschlussteil
- 5: Gewindepaarung (5.1; 5.2)
- 6: Sperrschraube (6.1; 6.2)
- 7: Außengewindeflanke (7.1; 7.2)
- 8: Muttergewinde (8.1; 8.2)
- 9: untere Fläche (9.1; 9.2)

## Patentansprüche

1. Anordnung zur Sicherung einer Gewindeverbindung zwischen zwei Schraubelementen einer Gewindepaarung gegen betriebsbedingtes Lockern mittels einer Sperrschraube, **dadurch gekennzeichnet,**
**dass** ein erstes Schraubelement an seinem, mit einem zweiten Schraubelement zu verschraubenden Ende eine Fase in Form einer zum Gewinde der Gewindepaarung (5) (5.1; 5.2) gegenläufigen Außengewindeflanke (7) (7.1; 7.2) aufweist, die mit der, in der Nähe der Stoßstelle der beiden Schraubelemente, im zweiten Schraubelement angeordneten Sperrschraube (6) (6.1; 6.2), vorzugsweise in Form einer Senkkopfschraube über deren untere Fläche (9) (9.1; 9.2) in Wirkverbindung steht.

2. Anordnung nach Anspruch 1, **dadurch gekennzeichnet,**
**dass** die Steigung der Außengewindeflanke (7) (7.1; 7.2) mindestens 0,5 mm größer ist als die der Gewindepaarung (5) (5.1; 5.2).

3. Anordnung nach den Ansprüchen 1 und 2, **dadurch gekennzeichnet,**
**dass** die Sperrschraube (6) (6.1; 6.2) mit der gegenläufigen Außengewindeflanke (7) (7.1; 7.2) über komplementäre Oberflächenstrukturierungen in Wirkverbindung steht.

## Claims

1. Arrangement for securing a threaded connection between two screw elements of a threaded pair by means of a locking screw to prevent loosening caused by operation, **characterised in that** a first screw element comprises on its end, which is to be screwed to a second screw element, a bezel in the form of an external threaded flank (7) (7.1; 7.2) which rotates in the opposite direction to the thread of the threaded pair (5) 5.1; 5.2) and is operatively connected by way of its lower surface (9) (9.1; 9.2) to the locking screw (6) (6.1; 6.2), preferably in the form of a countersunk head screw, which locking screw is disposed in the second screw element in the vicinity of the point of abutment of the two screw elements.

2. Arrangement as claimed in claim 1, **characterised in that** the pitch of the external threaded flank (7) (7.1; 7.2) is at least 0.5 mm larger than that of the threaded pair (5) (5.1; 5.2).

3. Arrangement as claimed in claims 1 and 2, **characterised in that** the locking screw (6) (6.1; 6.2) is operatively connected to the counter-rotating external threaded flank (7) (7.1; 7.2) by way of complementary surface structures.

## Revendications

1. Dispositif de sécurisation d'une liaison vissée entre deux éléments de vissage d'une paire de moyens de vissage pour éviter le desserrage en cours de fonctionnement à l'aide d'une vis de blocage,
**caractérisé en ce qu'**
un premier élément de vissage comporte à son extrémité destinée à être vissée au second élément de vissage, un congé sous la forme d'un flanc de filetage extérieur (7) (7.1 ; 7.2) en direction du filetage de la paire de moyens de vissage (5) (5.1 ; 5.2) et qui coopère avec une vis de blocage (6) (6.1 ; 6.2) prévue à proximité du point de jonction des deux éléments de vissage dans le second élément de vissage, cette vis étant notamment sous la forme d'une vis à tête fraisée qui coopère avec cet élément par sa surface inférieure (9) (9.1 ; 9.2).

2. Dispositif selon la revendication 1,
**caractérisé en ce que**
la pente du flanc de filetage extérieur (7) (7.1 ; 7.2) est supérieure d'au moins 0,5 mm par rapport à celle de la paire filetée (5) (5.1 ; 5.2).

3. Dispositif selon les revendications 1 et 2,
**caractérisé en ce que**
la vis de blocage (6) (6.1 ; 6.2) coopère avec le flanc de filetage extérieur (7) (7.1 ; 7.2) opposé par une structure de surface complémentaire.
